(19) Europäisches Patentamt
European Patent Office
Office européen des brevets

(11) EP 1 745 265 B1

(12) # EUROPÄISCHE PATENTSCHRIFT

(45) Veröffentlichungstag und Bekanntmachung des Hinweises auf die Patenterteilung:
**23.09.2015 Patentblatt 2015/39**

(21) Anmeldenummer: **05737848.1**

(22) Anmeldetag: **20.04.2005**

(51) Int Cl.:
***G01J 1/50*** (2006.01)

(86) Internationale Anmeldenummer:
**PCT/EP2005/051734**

(87) Internationale Veröffentlichungsnummer:
**WO 2005/108937 (17.11.2005 Gazette 2005/46)**

(54) **DOSISMESSFILM UND DOSISMESSVERFAHREN**

DOSING FILM AND ASSOCIATED METHOD

PELLICULE ET PROCEDE DE DOSAGE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **05.05.2004 DE 102004022071**

(43) Veröffentlichungstag der Anmeldung:
**24.01.2007 Patentblatt 2007/04**

(73) Patentinhaber: **TESA SE**
**20253 Hamburg (DE)**

(72) Erfinder:
- **NEUHAUS-STEINMETZ, Hermann**
  **22926 Ahrensburg (DE)**
- **PERLBACH, Dennis**
  **21629 Neu Wulmstorf (DE)**
- **MÜLLER, Dieter**
  **27449 Kutenholz-Mulsum (DE)**

(56) Entgegenhaltungen:
**US-A- 3 787 687 US-A- 4 130 760**

- **BUTSON M J ET AL: "Radiochromic film for medical radiation dosimetry" MATERIALS SCIENCE AND ENGINEERING R: REPORTS, ELSEVIER SEQUOIA S.A., LAUSANNE, CH, Bd. 41, Nr. 3-5, 25. September 2003 (2003-09-25), Seiten 61-120, XP004454908 ISSN: 0927-796X**
- **FAR WEST TECHNOLOGY: "Using Radiochromic Dosimeters"[Online] 16. Juli 2003 (2003-07-16), XP002343411 Gefunden im Internet: URL:http://web.archive.org/web/20030716052418/www.fwt.com/racm/support/PAL1.PDF> [gefunden am 2005-09-05]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 745 265 B1

**Beschreibung**

Die Erfindung betrifft einen Dosismessfilm für die Messung von UV-Strahlen und/oder Elektronenstrahlen mit einer strahlensensitiven Schicht sowie ein Dosismessverfahren und eine Verwendung des Dosismessfilms.

Ein Dosismessfilm für Elektronenstrahlen wird von der Firma tesa AG, Hamburg hergestellt. Bei diesem Film ist eine 20 μm dicke strahlenempfindliche Schicht auf einem 50 μm dicken Polyesterfilm angeordnet. Die strahlenempfindliche Schicht besteht im Wesentlichen aus einem Polyesterlack und dem strahlenempfindlichen Farbstoff Pararosanilin-nitril. Zur Herstellung des Messfilms werden die Bestandteile der Schicht in einem Lösungsmittel gemischt und auf den Polyesterfilm aufgetragen. Anschließend wird das Lösungsmittel der Schicht in einem Trockner wieder entzogen.

Die Farbreaktion von Pararosanilin-nitril in der Dosimeterfolie durch Strahlung ist nachstehend wiedergegeben:

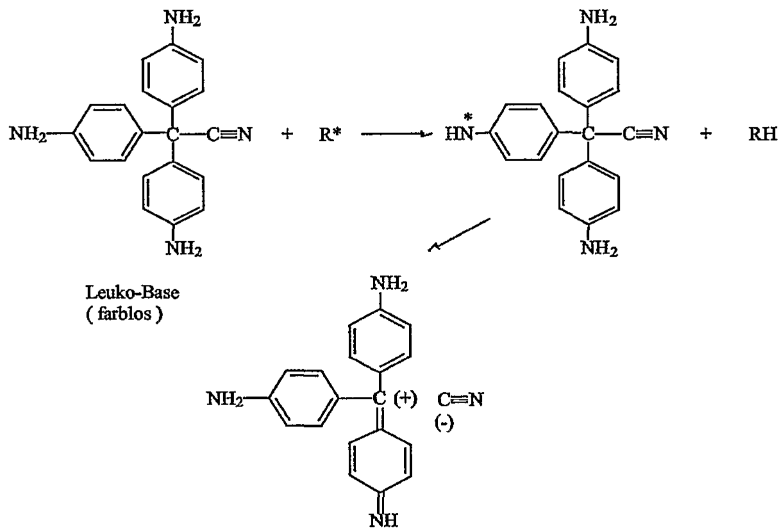

Leuko-Base
(farblos)

Farbstoff
(tief rot-violett)

Der im Messfilm enthaltene strahlenempfindliche Farbstoff Pararosanilin ist unbestrahlt transparent. Mit zunehmender Strahlendosis verfärbt er sich stärker ins Rote, da grünes Licht mit dem Wellenlängenmaximum bei etwa 550 nm durch den Farbstoff absorbiert wird.

Für die Transmission von grünem Licht durch den Film gilt die Beziehung:

$$T_{gr} = T_{gr0} * e^{-(a*d+b*D*d)}$$

mit

- $T_{gr0}$ = Konstante, ca. 0,88, da ein Teil des einfallenden Lichtes von der Oberfläche reflektiert wird.
- $T_{gr}$ = Transmission von grünem Licht
- a = strahlungsunabhängiger Absorptionskoeffizient
- d = Dicke der strahlenempfindlichen Schicht
- b = Absorptionskoeffizient, der die Strahlenempfindlichkeit des Films definiert
- D = Elektronenstrahlendosis

Für die erhaltene Elektronenstrahldosis folgt also bei einer gemessenen Transmission:

$$D = -\frac{\ln(T_{gr} / T_{gr0})}{b*d} - \frac{a}{b}$$

Aus der Formel ist ersichtlich, dass Dickenschwankungen der strahlenempfindlichen Schicht zu Messabweichungen in der gleichen prozentualen Größe führen. Schichtdicken von 20 μm sind aber nur mit erheblichem Aufwand

mit geringen Dickenabweichungen herzustellen.

Die tesa AG stellt darum einem zweiten Dosismessfilm für Elektronenstrahlen her, bei dem Eisenoxid in die strahlenempfindliche Schicht gemischt wird. Im unbestrahlten Zustand hat die mit Eisenoxid versetzte Schicht bei rotem und grünem Licht den gleichen Absorptionskoeffizienten a. Zusätzlich ist die Transmission $T_{rt}$ von rotem Licht bei etwa 650 nm unabhängig von der Elektronenstrahldosis.

Die Transmission $T_{rt}$ von rotem Licht wird darum zur Dickenkorrektur eingesetzt gemäß der dem Fachmann bekannten Beziehung:

$$T_{rt} = T_{rt0} * e^{-a*d}$$

Für die Elektronenstrahldosis D erhält man bei Einbeziehung der Transmission von grünem und rotem Licht mit der gegebenen Voraussetzung $T_{rt0} = T_{gr0}$:

$$D = \left( \frac{\ln(T_{rt})}{\ln(T_{gr})} - 1 \right) * b$$

Von der Firma Polymer-Physik, Tübingen wurde zu dem Film ein entsprechendes Messgerät hergestellt, bei dem rotes und grünes Licht durch je eine nebeneinander angeordnete grüne und eine rote Leuchtdiode erzeugt wird. Die Transmissionen des Messfilms werden durch zwei Fototransistoren, die den Leuchtdioden gegenübersitzen, gemessen. Das Gerät zeigt dem Benutzer die Elektronenstrahldosis direkt in der üblichen Einheit "kilo Gray" (kGy) an.

Der Dosismessfilm wird hauptsächlich für Elektronenstrahlanlagen benutzt, bei denen zu bestrahlendes bahnförmiges Material durch einen Elektronenstrahler gefahren wird und eignet sich für Elektronenstrahldosen von ca. 3 bis 50 kGy.

Für die Bestimmung von UV-Strahlendosen an industriellen UV-Anlagen gibt es bisher keine Dosismessfilme, die eine ausreichende absolute Genauigkeit zur Kalibrierung von UV-Strahlern haben. Betreiber von UV-Anlagen setzen darum im Wesentlichen scheibenförmige elektronische Geräte, die auf die durch die UV-Anlage laufende Bahn geklebt werden, ein. Da zum Beispiel das Dosismessgerät "Power Puck" von der Firma EIT, USA einen Durchmesser von ca. 100 mm und eine Dicke von ca. 15 mm hat lassen sich diese Messgeräte nicht durch UV-Anlagen fahren, bei denen die UV-Strahler über Umlenkwalzen zum Fördern bahnenförmigen Materials angeordnet sind.

Da hier keine Alternativen mit ausreichender Genauigkeit zur Verfügung stehen muss die Qualitätssicherung aufwendig über Produktmerkmale betrieben werden. Zudem verlieren übliche elektrisch betriebene UV-Strahler in den ersten 1000 Betriebstunden ca. 20 % ihrer Intensität und sind empfindlich gegen Verschmutzung. Somit gestaltet sich eine Ursachenanalyse für Schwankungen der Produktqualität ohne UV-Dosismessungen schwierig.

Weiterhin wird z. B. mit dem beschriebenen "Power Puck" bei Anlagen zum Fördern bahnförmigen Materials die Dosis ca. 15 mm oberhalb der Bahn und nicht auf der Bahn selbst bestimmt und auch schräg einfallende Strahlung wird wegen der Messaufnehmergeometrie nur unzulänglich erfasst wodurch erhebliche Abweichungen zur Strahlendosis im Produkt auftreten können.

Noch problematischer wird die Situation bei dreidimensionalen Formteilen, die durch UV-Anlagen gefahren werden. Hier ist eine richtige ortsabhängige Bestimmung der Dosis auf der Oberfläche der Formteile mit einem "Power Puck" praktisch unmöglich.

Der weiter oben beschriebene Dosismessfilm der tesa AG für Elektronenstrahlen färbt sich bei Bestrahlung mit UV-Licht rot. Allerdings zeigt er für UV-Strahlen keine reproduzierbaren Abhängigkeiten, so dass er für den kommerziell wesentlich interessanteren Bereich der UV-Bestrahlung nicht einsetzbar ist. Zusätzlich ist der eingesetzte Farbstoff Pararosanilin zu empfindlich für den interessierenden UV-Dosisbereich. Außerdem erfolgt oberhalb von ca. 60 °C ein thermisch bedingter Farbumschlag. Die strahlenbedingte Erwärmung liegt an den meisten Anlagen zur UV-Polymerisation und UV-Vernetzung oberhalb dieser Temperatur.

Ausgehend von diesem Stand der Technik ist der Fachmann vor die Aufgabe gestellt, einen Dosismessfilm anzugeben, mit dem sowohl Elektronenstrahlung als auch UV-Strahlung mit hinreichender Messgenauigkeit insbesondere bei flexiblem zu bestrahlendem Material erfassbar ist. Des Weiteren soll ein entsprechendes Dosismessverfahren angegeben werden.

Diese Aufgaben werden durch die in den Ansprüchen 1 und 9 angegebenen Merkmale gelöst. Eine Verwendung des Dosismessfilms ist in Anspruch 15 angegeben. Vorteilhafte Ausgestaltungen der Erfindungen sind jeweils in den Unteransprüchen gekennzeichnet.

Der Kerngedanke der Erfindung besteht darin, dass man ein reproduzierbares Verhalten des Dosismessfilms

für UV-Strahlen erhält, wenn der Dosismessfilm beidseitig blasenfrei abgedeckt wird, wobei die Deckfolie, die dem UV-Strahler zugewandt ist, durch ein geeignetes Material und eine geeignete Dicke die Strahlendosis soweit reduziert, dass die strahlenempfindliche Schicht des Dosismessfilms eine geeignete UV-Dosis erhält und sich nicht überhitzt. Es versteht sich, dass in dem Dosismessfilm auch mehrere unterschiedliche strahlensensitiven Schichten angeordnet sein können, die insbesondere für unterschiedliche Strahlungsarten empfindlich sind, und die gemeinsam beidseitig mit Deckfolien abgedeckt sind. Entscheidend hierbei ist, dass die Deckfolien unmittelbar vollflächig und ohne eingeschlossene Luftpolster an der strahlensensitiven Schicht anliegen.

Der Vorteil der Erfindung besteht darin, dass mit den Deckfolien wie im Folgenden beschrieben eine Inhibierung der strahlensensitiven Schicht durch Luftsauerstoff oder sonstige Einflüsse vermieden wird. Beispielsweise kann der Dosismessfilm einer mechanischen Belastung ausgesetzt werden, in dem er über Umlenkwalzen geführt und derart Knick- oder Biegevorgängen unterworfen wird. Die zusätzlich Abdeckfolie beziehungsweise die beiderseits angebrachten Deckfolien schützen die UV-sensitive Schicht vor Abrieb, so dass auch nach oder während einer mechanischen Belastung eine optische Kontrolle einer Strahlenbelastung, der der Dosismessfilm ausgesetzt war, überprüft werden kann. Mit der zusätzlichen Abdeckfolie sind insbesondere sehr dünne strahlungsempfindliche Schichten handhabbar, die z. B. in ESH-Dosismessfilmen verwendet werden. Dabei werden vorzugsweise derartige strahlensensitiven Schichten verendet, die sowohl für UV-Strahlung als auch für Elektronenstrahlen sensitiv sind.

Mit der zusätzlichen Deckfolie wird eine unzulässige Erwärmung durch Temperatureinflüsse während der Bestrahlung der strahlensensitiven Schicht beziehungsweise eine zu hohe Strahlenbelastung durch Reduzierung der in der strahlenempfindlichen Schicht ankommenden Strahlung erreicht. Dies kann vom Fachmann durch eine geeignete Auswahl der Dicke und des Materials der Deckfolien ausgeführt werden.

Mit der erfindungsgemäßen vorgesehenen Ausgestaltung ist es möglich, mit einem Dosismessfilm sowohl UV-Strahlung als auch Elektronenstrahlen auszumessen. Der hierfür eingesetzte Farbstoff in der strahlensensitiven Schicht ist das dem Fachmann bekannte Pararosanilin, das in einem geeigneten Trägermaterial eingearbeitet werden kann.

Zusätzlich kann in der strahlensensitiven Schicht ein Trübungsmittel, insbesondere Eisenoxyd, vorgesehen sein wie im Anspruch 2 gekennzeichnet. Hiermit können, wie vorstehend ausgeführt, Messfehler durch Dickenschwankungen eliminiert werden.

Vorzugsweise ist die strahlensensitive Schicht nach Anspruch 3 in einer Dicke von 1 bis 150 $\mu$m und insbesondere in einer Dicke von 2 bis 50 $\mu$m ausgeführt, um derart einen flexiblen Dosismessfilm zu erhalten, der auch auf flexible Materialien, die beispielsweise in einer Bestrahlungsanlage über Umlenkwalzen geführt werden, aufgeklebt werden kann.

Zur Absorption der UV-Strahlung in der Deckfolie ist vorgeschlagen, dass diese in einer derartigen Dicke ausgeführt ist, dass 0,1 bis 95 % und insbesondere 1 bis 50 % der auf den Dosismessfilm auftreffenden UV-Strahlung und hier insbesondere der UVC-Strahlung die strahlensensitive Schicht erreicht. Die Wahl wird entsprechend der gewünschten Filmempfindlichkeit getroffen.

Als Materialien für die Deckfolien sind nach Anspruch 4 Kunststoffe und/oder beschichtetes Papier vorgeschlagen, wobei der Kunststoff vorzugsweise aus den folgenden Materialien: PET, PP, PE, PVC und PS gewählt wird.

Gemäß einer weiteren Ausgestaltung in Anspruch 5 besteht eine oder beide der Deckfolien aus einer aufgedampften metallischen Spiegelschicht, die einen Teil der Strahlung reflektiert in Abhängigkeit der Dicke, in der sie aufgedampft wird. Dabei kann diese metallisierte Spiegelschicht selbst bereits strahlensensitiv ausgeführt sein.

Zum Aufbringen der strahlensensitiven Schicht auf die erste Deckfolie ist nach Anspruch 6 vorgeschlagen, dass die strahlensensitive Schicht beziehungsweise deren Bestandteile in hierfür geeigneten Lösungsmitteln gelöst und auf der Deckfolie abgeschieden werden. Das Abscheiden erfolgt dabei insbesondere in einer solchen Dicke, dass die strahlensensitive Schicht selbst über eine ausreichende Eigenstabilität verfügt, so dass sie von der Deckfolie wiederum abziehbar ist. Die Haftkraft zwischen der Deckfolie und der strahlensensitiven Schicht kann dabei vom Fachmann in gewünschter Größe durch eine Vorbehandlung der Deckfolie eingestellt werden. Beilspielsweise wird die Deckfolie in einer Coronaanlage vorbehandelt.

Zum Anbringen des Dosismessfilms auf einem gewünschten Substrat ist entsprechend dem Anspruch 7 zumindest eine der Deckfolien auf ihrer nach außen weisenden Seite mit einer Klebeschicht versehen, um den Dosismessfilm auf dem Substrat aufzukleben. Zur Handhabung des Dosismessfilms, der üblicherweise zu einer Rolle aufgewickelt ist, ist diese Klebeschicht selbst mit einer weiteren Trennschicht vorzugsweise in Form eines Releaseliners versehen beziehungsweise ist die gegenüberliegende andere Deckfolie an ihrer nach außen weisenden Seite antiadhäsiv ausgerüstet.

Zur Verbindung der Deckfolien mit der strahlensensitiven Schicht ist im Anspruch 8 ausgeführt, dass diese jeweils mit Klebeschichten miteinander verbunden sind. Als Klebestoffe kommen insbesondere lösungsmittelhaltige Kleber oder Hotmelt-Kleber in Betracht.

Die UV-Strahlenvernetzung hat in der Verfahrenstechnik breite Anwendungsgebiete gefunden beispielsweise bei der Vernetzung und Polymerisation von Lacken, Drucktinten und Klebemassen, die auf Trägermaterialien wie Folien, Geweben, Fliesen, Holz oder Metall beschichtet werden können. Weiterhin werden UV-Strahlen eingesetzt zum Sterilisieren unterschiedlicher Gegenstände und bei der Chip- und Platinenherstellung in der Elektronikindustrie.

Zur Messung von bestrahlen UV-Dosismessfilmen wurde ein Messgerät entwickelt, dass auf dem weiter oben beschriebenen Messprinzip des Gerätes von Firma Polymer-Physik aufbaut. Es enthält aber anstelle je einer Leuchtdiode für rot und grün nur eine Leuchtdiode, die elektronisch auf beide Farben umschaltbar ist. Dadurch wird für beide Wellenlängen an exakt der gleichen Stelle gemessen, wodurch die Messgenauigkeit deutlich erhöht wird. Weiterhin wird nur ein Foto-transistor benötigt, so dass ein zeitliches Driften eliminiert wird.

Das erfindungsgemäße Verfahren zeichnet sich dadurch aus, dass der Dosismessfilm jeweils mit Licht unterschiedlicher Wellenlängen von ein und derselben Lichtquelle bestrahlt wird, so dass wie vorstehend ausgeführt Messfehler oder eine zeitliche Drift der Messergebnisse ausgeschlossen sind.

Typische Bestrahlungsvorrichtungen, bei denen das Dosismessverfahren zum Einsatz kommt, weisen Strahlungsvorrichtungen mit Strahlerleistungen von 40 bis 240 W/cm je Strahler auf, wobei die UV-Anlagen aus 1 bis 10 oder mehr röhrenförmigen Strahlern bestehen können. Das Dosismessverfahren ist auch für Strahler geringerer Leistung und mit anderen Bauformen geeignet. Die mit dem entwickelten UV-Dosismessfilm messbaren Strahlungsdosen, bei denen sich der Film linear verhält, bewegen sich zwischen 0,5 bis 50 $mJ/cm^2$ wenn keine besonderen Maßnahmen zum Kühlhalten des Films getroffen werden. Selbstverständlich können die Dosismessfilme zusätzlich gekühlt werden, um ihre Leistungsfähigkeit zu erhöhen. Wenn der Film nicht unmittelbar an einem leitungsintensiven UV-Strahler vorbeiläuft oder nicht übermäßig erwärmt wird bleibt er bis ca. 200 $mJ/cm^2$ linear. Die vorstehend genannten Strahlungsdosen korrelieren dabei mit dem vom "Power Puck" für UV-C-Strahlung gemessenen Werten. Da bei den am Markt erhältlichen elektronischen UV-Dosimetern Sensoren mit verschiedenen Wellenlängen und Bandbreiten verwendet werden, kann man unterschiedliche Produkte mit den jeweils benötigten UV-Strahlungsdosen bestrahlen.

Vorzugsweise wird wie im Anspruch 10 angegeben das Licht der unterschiedlichen Wellenlängen mit einer dem Fachmann bekannten Fotodiode erzeugt, die einfach handhabbar und langlebig ist.

Weiterhin können nach Anspruch 11 beliebig lange Dosismessfilme oder Filmstreifen motorisch durch das Messgerät gezogen werden, so dass beliebige Endlosmaterialien mit den Dosismessfilmen bestückt und in gewünschter Weise bestrahlt werden können.

Nach Anspruch 14 werden mit dem Fachmann bekannten verfahrenstechnischen Mitteln die Messwerte des Messgeräts von einem Computer ausgelesen beziehungsweise unmittelbar an diesen übertragen und vorzugsweise zum Zwecke der einfachen Überwachung in der Einheit "$mJ/cm^2$"angezeigt.

Besonders werden nach Anspruch 14 energiereiche UV-C-Strahlen oder eine noch energiereichere elektromagnetische Strahlung mit dem Dosismessverfahren beziehungsweise dem Dosismessfilm ausgemessen, da ein gewünschter Anteil der Strahlung in der zusätzlichen Deckfolie absorbiert wird.

Vorzugsweise eignet sich das Dosismessverfahren unter Verwendung des Dosismessfilms zur Durchführung in einem vorstehend beschriebenen Messgerät mit einer zwischen zwei unterschiedlichen Farben umschaltbaren Lichtquelle.

Ebenso ist es möglich, dass eine ortsabhängige Darstellung der gesamten auf den Dosismessfilm einwirkenden UV-Strahlung beispielsweise in einem auf einem Computerbildschirm wiedergegebenen Diagramm angezeigt wird, um z. B. die gesamte Bahnbreite eines zu bestrahlenden Materials überwachen zu können.

Insbesondere ist hierbei das Bestrahlen über die gesamte Breite eines bahnförmigen Materials sowie die Kontrolle durch den erfindungsgemäßen Dosismessfilm möglich. Des Weiteren können auch dreidimensionale Teile, die mit dem Dosismessfilm beklebt sind, in gewünschter Weise bestrahlt werden, wobei durch den Dosismessfilm die gesamte Strahlendosis auf der Oberfläche des dreidimensionalen Objekts ausmessbar ist.

Für jede hergestellte Charge des Dosimeterfilms wird ein Empfindlichkeitsfaktor bestimmt, der auf den Filmrollen vermerkt wird. Dieser Empfindlichkeitsfaktor ist als Parameter in das Messgerät speicherbar. Damit ist die Kalibrierbarkeit der Messgeräte für die Zukunft sichergestellt.

Ein Ausführungsbeispiel der Erfindung wird nachstehend anhand der Zeichnung näher erläutert. Es zeigt:

Fig. 1: einen Dosismessfilm im Querschnitt.

Aus der Darstellung in Figur 1 ist der Aufbau eines Dosismessfilms 100 ersichtlich. Er besteht im Wesentlichen aus einer Deckfolie, die als Trägerfilm 10 dient, aus einem hierfür geeigneten elastischen Kunststoffmaterial mit einer vom Fachmann wählbaren Materialstärke. Auf dem Trägerfilm 10 ist eine UV-sensitive und/oder elektronenstrahlsensitive Schicht 11 aufgebracht, beispielsweise aus einer Lösung abgeschieden, die unter dem Einfluss einer ultravioletten Strahlung, eine Farbänderung durchläuft. Die Ausgestaltung der UV-sensitiven Schicht 11 ist vom Fachmann beliebig wählbar. Zum Schutz der UV-sensitiven Schicht 11 vor mechanischen und insbesondere vor zu hohen Strahlungseinflüssen ist auf der UV-sensitiven Schicht 11 eine Deckfolie 12 aufgebracht und in geeigneter Weise befestigt z. B. verklebt. Eine Klebeschicht 14 kann aus einem vom Fachmann wählbaren Klebstoff bestehen. Die UV-sensitive Schicht 11 kann auch mit dem Trägerfilm 10 verklebt sein. Die Deckfolie 12 verfügt über je nach Verwendung des Dosismessfilms 100 frei bestimmbare wärmeisolierende und/oder UV-absorbierende und/oder luftundurchlässige Eigenschaften. In bevorzugter Weise besteht die Deckfolie 12 sowie der Trägerfilm 10 aus einem elastischen Kunststoffmaterial oder aus beschichtetem Papier. Mit der Deckfolie 12 ist zusätzlich die mechanische Stabilität des Dosismessfilm 100 erhöht und es ist möglich, eine sehr dünne UV-sensitive Schicht 11 vorzusehen, um die Empfindlichkeit des Dosismessfilms 100 zu erhöhen. Somit kann der auf ein beliebiges Substrat 15 aufgeklebte Dosismessfilm 100 auch in einer UV-Anlage über Umlenkwalzen gefördert werden. Um den Dosismessfilm 100 an einer gewünschten Stelle fest anzubringen kann an der Unterseite des Trägerfilms 10 eine selbstklebende Haftschicht 13 vorgesehen sein. In der UV-Anlage wird das beispielsweise endlos hindurchgeförderte Substrat 15 sowie der darauf aufgeklebte Dosismessfilm 100 von UV-Lampen 16 bestrahlt, wobei durch die Abdeckfolie 12 nur das gewünschte Maß an UV-Strahlung auf die strahlensensitive Schicht 11 beziehungsweise das darunter liegende Substrat 15 einwirkt. Durch Kontrolle des Dosismessfilms 100 ist die tatsächliche Strahlungsmenge überwachbar beziehungsweise eine Bestrahlungsanlage kalibrierbar.

Die Figur 1 ist nicht maßstäblich, d. h., dass der Trägerfilm 10, die UV-sensitive Schicht 11 und die Deckfolie 12 jeweils auch andere als die hier dargestellten Materialstärken aufweisen können.

BEZUGSZEICHENLISTE

10 Trägerfilm, Deckfolie
11 UV-sensitive Schicht
12 Deckfolie
13 Haftschicht
14 Klebeschicht
15 Substrat
16 UV-Strahler

100 Dosismessfilm

## Patentansprüche

1. Dosismessfilm (100) für die Messung von UV-Strahlen und/oder Elektronenstrahlen mit einer strahlensensitiven Schicht (11), wobei auf beiden Seiten der strahlensensitiven Schicht (11) Deckfolien (10, 12) vorgesehen sind, wobei die strahlensensitive Schicht (11) den Farbstoff Pararosanilin-nitril enthält, **dadurch gekennzeichnet, dass** die strahlensensitive Schicht (11) durch die Deckfolien (10, 12) beidseitig blasenfrei abgedeckt wird, wobei die Deckfolien (10, 12) in einer derartigen Dicke ausgeführt sind, dass 0,1 % bis 95% und insbesondere 1% bis 50% von auf den Dosismessfilm auftretender UV-Strahlung die strahlensensitive Schicht (11) erreicht.

2. Dosismessfilm nach Anspruch 1, **dadurch gekennzeichnet, dass** in der strahlensensitiven Schicht (11) ein Trübungsmittel insbesondere Eisenoxyd enthalten ist.

3. Dosismessfilm nach einem der Ansprüche 1 bis 2, **dadurch gekennzeichnet, dass** die strahlensensitive Schicht (11) eine Dicke von 1 bis 150 $\mu$m insbesondere von 2 bis 250 $\mu$m aufweist.

4. Dosismessfilm nach einem der Ansprüche 1 bis 3, **dadurch gekennzeichnet, dass** die Deckfolien (10, 12) aus Kunststoff und/oder aus beschichtetem Papier bestehen.

5. Dosismessfilm nach einem der Ansprüche 1 bis 4, **dadurch gekennzeichnet, dass** eine oder beide der Deckfolien (10, 12) aus einer aufgedampften metallischen Spiegelschicht bestehen bzw. mit einer aufgedampften metallischen Schicht versehen sind.

6. Dosismessfilm nach einem der Ansprüche 1 bis 5, **dadurch gekennzeichnet, dass** die strahlensensitive Schicht (11) aus einem Lösungsmittel auf eine Deckfolie (10, 12) abgeschieden ist.

7. Dosismessfilm nach einem der Ansprüche 1 bis 6, **dadurch gekennzeichnet, dass** zumindest eine der Deckfolien (10, 12) auf ihrer nach außen weisenden Seite mit einer Klebeschicht versehen ist.

8. Dosismessfilm nach einem der Ansprüche 1 bis 7, **dadurch gekennzeichnet, dass** die strahlensensitive Schicht (11) mit der Deckfolie (12) und/oder der Deckfolie (10) durch Klebeschichten miteinander verbunden sind.

**9.** Dosismessverfahren unter Verwendung eines Dosismessfilms (100) nach einem der Ansprüche 1 bis 8, **dadurch gekennzeichnet, dass** in einem Messgerät Licht mit zwei oder mehr verschiedenen Wellenlängen zur Bestimmung der optischen Transmission des Dosismessfilms (100) bei den verschiedenen Wellenlängen mit einer zwischen den verschiedenen Wellenlängen umschaltbaren Lichtquelle erzeugt wird.

**10.** Dosismessverfahren nach Anspruch 9, **dadurch gekennzeichnet, dass** das Licht mit einer Fotodiode erzeugt wird.

**11.** Dosismessverfahren nach Anspruch 9 oder 10, **dadurch gekennzeichnet, dass** der Dosismessfilm (100) motorisch durch das Messgerät gezogen wird.

**12.** Dosismessverfahren nach Anspruch 9 bis 11, **dadurch gekennzeichnet, dass** Messwerte des Messgeräts über eine elektronische Verbindung an einem Computer übertragen werden und insbesondere eine direkte Anzeige der Strahlendosis in "$mJ/cm^2$" erfolgt.

**13.** Dosismessverfahren nach Anspruch 9 bis 12, **dadurch gekennzeichnet, dass** aus dem Messgerät eine Darstellung der Strahlendosis in Abhängigkeit vom Ort auf dem Dosismessfilm (100) ausgelesen wird.

**14.** Dosismessverfahren nach Anspruch 9 bis 13, **dadurch gekennzeichnet, dass** der Dosismessfilm (100) ausschließlich mit UV-Strahlung und insbesondere nur mit UV-C-Strahlung und noch kurzwelligerer elektromagnetischer Strahlung bestrahlt wird.

**15.** Verwendung eines Dosismessfilms (100) nach einem der Ansprüche 1 bis 8 zur Durchführung eines Dosismessverfahrens nach einem der Ansprüche 9 bis 14 in einem Messgerät mit einer Lichtquelle, die zur Abgabe von Licht mit zwei oder mehr unterschiedlichen Wellenlängen umschaltbar ist.

## Claims

**1.** Dose-measurement film (100) for the measurement of UV radiation and/or electron-beam radiation with a radiation-sensitive layer (11), wherein outer foils (10, 12) have been provided on both sides of the radiation-sensitive layer (11), wherein the radiation-sensitive layer (11) comprises the dye pararosaniline nitrile, **characterized in that** the radiation-sensitive layer (11) is given a blister-free protective covering on both sides by the outer foils (10, 12), wherein the thickness of the outer foils (10, 12) has been designed in such a way that from 0.1% to 95%, and in particular from 1% to 50%, of UV radiation appearing on the dose-measurement film reaches the radiation-sensitive layer (11).

**2.** Dose-measurement film according to Claim 1, **characterized in that** the radiation-sensitive layer (11) comprises an opacifier, in particular iron oxide.

**3.** Dose-measurement film according to either of Claims 1 and 2, **characterized in that** the thickness of the radiation-sensitive layer (11) is from 1 to 150 $\mu m$, in particular from 2 to 250 $\mu m$.

**4.** Dose-measurement film according to any of Claims 1 to 3, **characterized in that** the outer foils (10, 12) are composed of plastic and/or of coated paper.

**5.** Dose-measurement film according to any of Claims 1 to 4, **characterized in that** one or both of the outer foils (10, 12) are composed of a vapor-deposited metallic reflective layer or have been provided with a vapor-deposited metallic layer.

**6.** Dose-measurement film according to any of Claims 1 to 5, **characterized in that** the radiation-sensitive layer (11) has been deposited from a solvent onto an outer foil (10, 12).

**7.** Dose-measurement film according to any of Claims 1 to 6, **characterized in that** at least one of the outer foils (10, 12) has been provided with an adhesive layer on its outward-facing side.

**8.** Dose-measurement film according to any of Claims 1 to 7, **characterized in that** adhesive layers have been used for bonding of the radiation-sensitive layer (11) to the outer foil (12) and/or to the outer foil (10).

9. Dose-measurement method using a dose-measurement film (100) according to any of Claims 1 to 8, **characterized in that**, in a measurement device, light is generated with two or more different wavelengths for determination of the optical transmittance of the dose-measurement film (100) at the different wavelengths, using a light source switchable between the different wavelengths.

10. Dose-measurement method according to Claim 9, **characterized in that** a photodiode is used to generate the light.

11. Dose-measurement method according to Claim 9 or 10, **characterized in that** the dose-measurement film (100) is drawn by a motor through the measurement device.

12. Dose-measurement method according to any of Claims 9 to 11, **characterized in that** measured values from the measurement device are transferred by way of an electronic connection to a computer, and in particular direct display of the radiation dose in "$mJ/cm^2$" takes place.

13. Dose-measurement method according to any of Claims 9 to 12, **characterized in that** a representation of the radiation dose as a function of the location on the dose-measurement film (100) is read out from the measurement device.

14. Dose-measurement method according to any of Claims 9 to 13, **characterized in that** the dose-measurement film (100) is irradiated exclusively with UV radiation, and in particular only with UV-C radiation, and with electromagnetic radiation of even shorter wavelength.

15. Use of a dose-measurement film (100) according to any of Claims 1 to 8 for conduct of a dose-measurement method according to any of Claims 9 to 14 in a measurement device using a light source which can be switched over to emit light with two or more different wavelengths.

**Revendications**

1. Film dosimétrique (100) pour la mesure de rayons UV et/ou de faisceaux d'électrons, comportant une couche radiosensible (11), sur les deux faces de la couche radiosensible (11) étant prévus des pellicules de recouvrement (10, 12), la couche radiosensible (11) contenant le colorant pararosaniline-nitrile, **caractérisé en ce que** la couche radiosensible (11) est recouverte sans bulles sur les deux faces par les pellicules de recouvrement (10, 12), les pellicules de recouvrement (10, 12) étant réalisées en une épaisseur telle que 0,1 % à 95 % et en particulier 1 % à 50 % du rayonnement UV arrivant sur le film dosimétrique atteignent la couche radiosensible (11).

2. Film dosimétrique selon la revendication 1, **caractérisé en ce qu'**un opacifiant, en particulier de l'oxyde de fer, est contenu dans la couche radiosensible (11).

3. Film dosimétrique selon l'une quelconque des revendications 1 et 2, **caractérisé en ce que** la couche radiosensible (11) présente une épaisseur de 1 à 150 μm, en particulier de 2 à 250 μm.

4. Film dosimétrique selon l'une quelconque des revendications 1 à 3, **caractérisé en ce que** les pellicules de recouvrement (10, 12) sont constituées de matière plastique et/ou de papier couché.

5. Film dosimétrique selon l'une quelconque des revendications 1 à 4, **caractérisé en ce que** l'une ou les deux des pellicules de recouvrement (10, 12) consiste(nt) en une couche réflectrice métallique déposée par vaporisation ou est/sont munie(s) d'une couche métallique déposée par vaporisation.

6. Film dosimétrique selon l'une quelconque des revendications 1 à 5, **caractérisé en ce que** la couche radiosensible (11) est déposée sur une pellicule de recouvrement (10, 12) à partir d'un solvant.

7. Film dosimétrique selon l'une quelconque des revendications 1 à 6, **caractérisé en ce qu'**au moins l'une des pellicules de recouvrement (10, 12) est munie d'une couche adhésive sur sa face tournée vers l'extérieur.

8. Film dosimétrique selon l'une quelconque des revendications 1 à 7, **caractérisé en ce que** la couche radiosensible (11) et la pellicule de recouvrement (12) et/ou la pellicule de recouvrement (10) sont assemblées entre elles par des couches adhésives.

**9.** Procédé de mesure de doses avec utilisation d'un film dosimétrique (100) selon l'une quelconque des revendications 1 à 8, **caractérisé en ce que** dans un appareil de mesure est engendrée de la lumière à deux ou plus de deux différentes longueurs d'onde pour la détermination de la transmission optique du film dosimétrique (100) aux différentes longueurs d'onde par une source de lumière commutable entre les différentes longueurs d'onde.

**10.** Procédé de mesure de doses selon la revendication 9, **caractérisé en ce que** la lumière est engendrée par une photodiode.

**11.** Procédé de mesure de doses selon la revendication 9 ou 10, **caractérisé en ce que** le film dosimétrique (100) est à entraînement motorisé par l'appareil de mesure.

**12.** Procédé de mesure de doses selon l'une quelconque des revendications 9 à 11, **caractérisé en ce que** des valeurs mesurées de l'appareil de mesure sont transmises à un ordinateur via une connexion électronique et en particulier un affichage direct de la dose de radiation s'effectue en « $mJ/cm^2$ ».

**13.** Procédé de mesure de doses selon l'une quelconque des revendications 9 à 12, **caractérisé en ce qu'**à partir de l'appareil de mesure on lit sur le film dosimétrique (100) une représentation de la dose de radiation en fonction du lieu.

**14.** Procédé de mesure de doses selon l'une quelconque des revendications 9 à 13, **caractérisé en ce que** le film dosimétrique (100) est irradié exclusivement avec un rayonnement UV et en particulier seulement avec un rayonnement UV-C et un rayonnement électromagnétique à encore plus courte longueur d'onde.

**15.** Utilisation d'un film dosimétrique (100) selon l'une quelconque des revendications 1 à 8, pour la mise en oeuvre d'un procédé de mesure de doses selon l'une quelconque des revendications 9 à 14 dans un appareil de mesure comportant une source de lumière qui est commutable pour l'émission de lumière à deux ou plus de deux différentes longueurs d'onde.

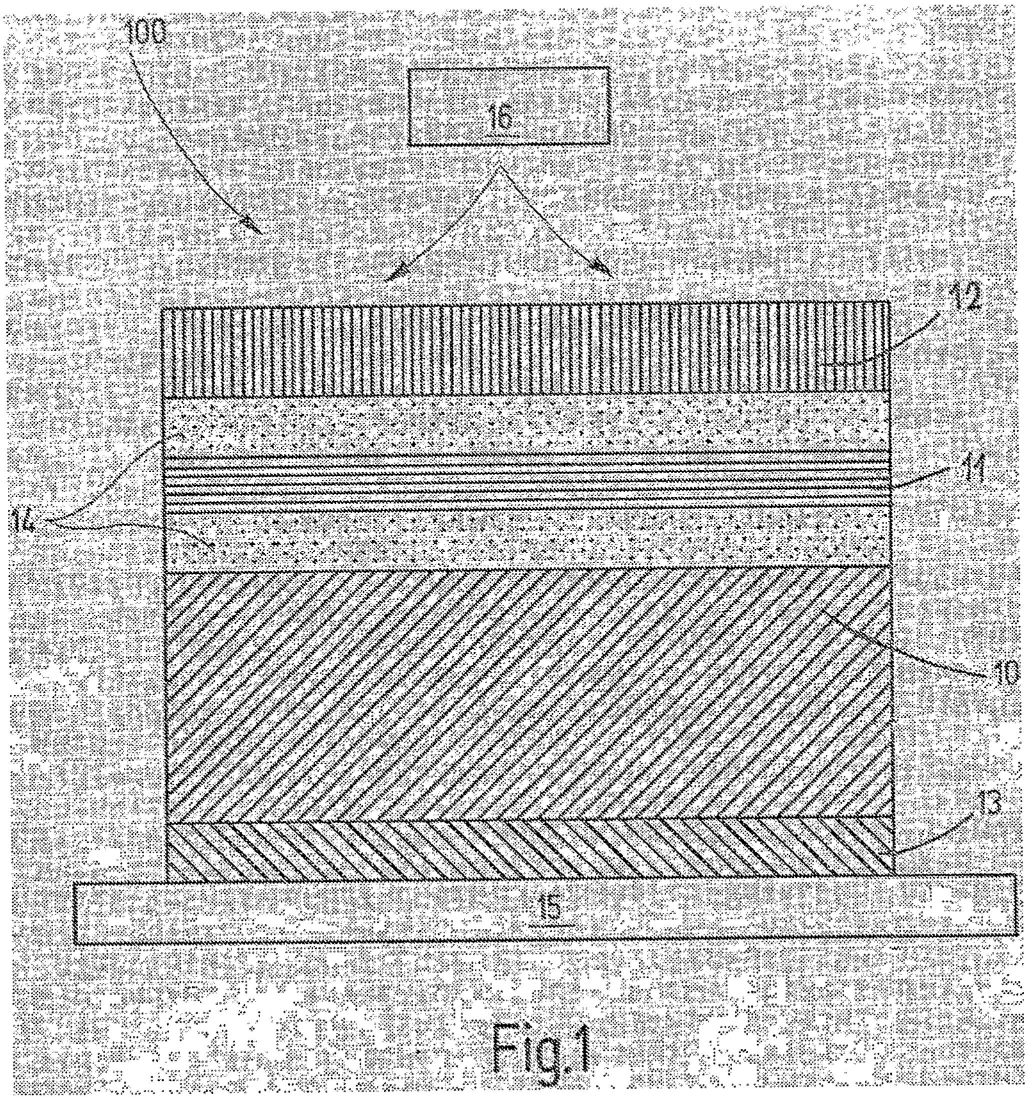


Fig.1